# EUROPEAN PATENT SPECIFICATION

(11) **EP 0 624 683 B1**
(45) Date of publication and mention of the grant of the patent: **13.03.1996**
(21) Application number: 93107744.0
(22) Date of filing: 12.05.1993
(51) Int. Cl.: D06P 1/647, D06P 3/54

(54) **Method for dyeing polyester fibers in an alkaline dyeing bath in the presence of aminoacid and of polyamino-polycarboxylic acid**
Verfahren zum Färben von Polyesterfasern in einem alkalischen Färbebad in Gegenwart von Aminosäuren und Polyaminopolycarbonsäure
Procédé de teinture de fibres polyester en bain de teinture alcalin en présence d'aminoacide et de polyaminopolycarboxyacide

(43) Date of publication of application: 17.11.1994
(73) Proprietor: DyStar Japan Ltd., Osaka (JP)
(72) Inventor: Konishi, Kazuhisa, Hoechst Mitsubishi Kasei Co Ltd, Kitakyushu-shi, Fukuoka (JP); Kasahara, Kenji, Hoechst Mitsubishi Kasei Co. Ltd., Kitakyushu-shi, Fukuoka (JP); Egashira, Toru, Hoechst Mitsubishi Kasei Co., Ltd., Kitakyushu-shi, Fukuoka (JP)
(74) Representative: TER MEER - MÜLLER - STEINMEISTER & PARTNER

(56) References cited:
- FR-A- 2 388 030
- GB-A- 2 226 051
- DATABASE WPI Week 8220, Derwent Publications Ltd., London, GB; AN 82-40498E & JP-A-57 059 999 (SHOWA DENKO KK) 10 April 1982
- AMERICAN DYESTUFF REPORTER vol. 65, no. 11 , November 1976 , NEW YORK US pages 32 - 34.61 J. HAN WOOD 'Chelating agents in dyeing.'
- DATABASE WPI Week 9327, Derwent Publications Ltd., London, GB; AN 93-217369 & JP-A-05 140 877 (MITSUBISHI KASEI HOECHST KK) 8 June 1993

## Description

### METHOD FOR DYEING POLYESTER FIBERS IN AN ALKALINE DYEING BATH

The present invention relates to a method for dyeing polyester fibers by means of a disperse dye by an exhaustion method under an alkaline condition in an aqueous medium in good reproducibility while preventing the decomposition of the disperse dye, and showing good scouring effect (especially desizing effect).

It is common to conduct dyeing of polyester fibers by means of a disperse dye in a weakly acidic dyeing bath (pH 5 to 7) at a temperature of from 120 to 140°C, because the disperse dye is unstable in an alkaline dyeing bath, and it is difficult under an alkaline condition to dye polyester fibers with a constant color tone with good reproducibility.

On the other hand, when the dyeing of polyester fibers is conducted under an alkaline condition, it is known that: ①a trouble (such as tarring or blooming) caused by the precipitated oligomer as observed in the case of dyeing under an acidic condition can be prevented, since the polyester oligomer precipitating in the dyeing bath from the interior of the fibers under the dyeing condition will dissolve in an alkaline dyeing bath, ② a sizing agent such as polyacrylic acid ester type or polyvinyl alcohol type used in a spinning or weaving step can be removed.

In such an alkaline condition dyeing, it is necessary to use a disperse dye having relatively high alkali resistance, but when the temperature of the dyeing bath is raised to 120 to 140°C, the disperse dye is decomposed and dyeing can not be conducted with good dyeing reproducibility.

To solve the above problem, a method whereby a certain amino acid or a derivative thereof is incorporated to the dyeing bath is proposed (Japanese Unexamined Patent Publication No. 229283/1990). This method is preferable with a view to preventing the decomposition of the disperse dye used in the exhaustion method under an alkaline condition in an aqueous medium with good dyeing reproducibility, while it is not satisfactory from the viewpoint of scouring effect because of insufficient desizing effect.

Under these circumstances, the present inventors have conducted extensive studies for a dyeing method to improve the desizing effect during the exhaustion dyeing of polyester fibers by means of a disperse dye under an alkaline condition and in the presence of a certain amino acid or a derivative thereof. As a result, they have found that by incorporating a specific polycarboxylic acid and a salt thereof to the dyeing bath, the sizing agent can be effectively removed, disperse dye can be stabilized, and dyeing can be conducted satisfactorily.

The present invention provides a method for dyeing polyester fibers by using a disperse dye, wherein said dyeing is conducted under an alkaline condition in an aqueous medium in the presence of ① at least one amino acid member selected from the group consisting of an amino acid, an amino acid derivative having at least one hydrogen atom of its amino group replaced with an organic group, and a salt of such an amino acid or amino acid derivative, and ② at least one polycarboxylic acid or a salt thereof selected from the group consisting of ethylenediamine having at least two hydrogen atoms of its amino group replaced with a -RCOOH group (R means a C₁₋₃ alkylene group) and a salt thereof; polyethylenepolyamine having at least two hydrogen atoms of its amino group or imino group replaced with a -RCOOH group (R means the same as defined above) and a salt thereof; and nitrilotriacetic acid; nitrilotripropionic acid, iminodiacetic acid, iminodipropionic acid, β-hydroxyethyl-iminodiacetic acid, β-hydroxyethyl-iminodipropionic acid and salts thereof.

Now, the present invention will be described in detail with reference to the preferred embodiments.

The disperse dye to be used in the present invention is not particularly restricted as far as it is resistant to alkaline under alkaline dyeing condition and includes azo type disperse dyes such as monoazo type and disazo type and disperse dyes such as anthraquinone type, phthalocyanine type and copper formazan type. Particularly preferred is an azo type dye. More specifically, disperse dyes having the structures of the following formulas (I) to (VI), may be mentioned.

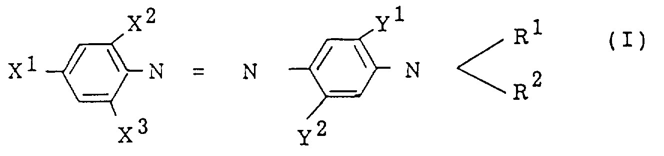

In the above formula, wherein each of X¹ to X³ is a hydrogen atom, a lower alkyl group, a nitro group, a cyano group or a halogen atom, Y¹ is a hydrogen atom, a lower alkoxy group or a lower alkyl group, Y is a hydrogen atom or an acyl amino group, each of R¹ and R is a hydrogen atom or a lower alkyl group which may be substituted by a cyano group, a hydroxyl group, a halogen atom, an alkylcarbonyl group, a lower alkylcarbonyloxy group, a phenyl group, a phenoxy group or a benzoyloxy group.

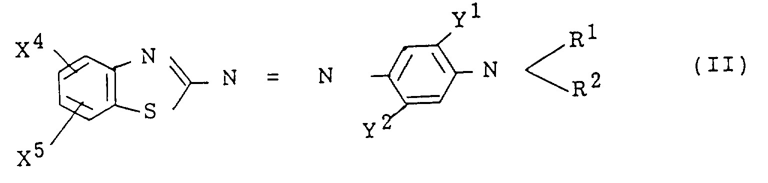

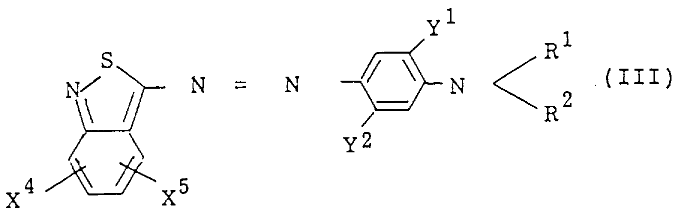

In the formulas (II) and (III), each of X⁴ and X⁵ is a hydrogen atom, a halogen atom or a nitro group, and Y¹, Y, R¹ and R are as defined above.

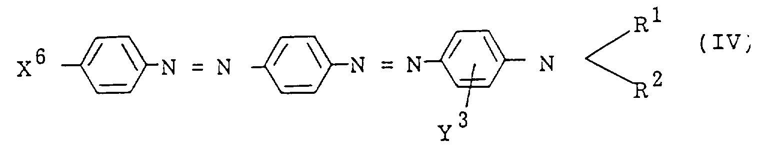

In the above formula, X⁶ is a hydrogen atom, a nitro group, a lower alkyl group or a halogen atom, Y³ is a hydrogen atom, a lower alkyl group or a lower alkoxy group, and R¹ and R are as defined above.

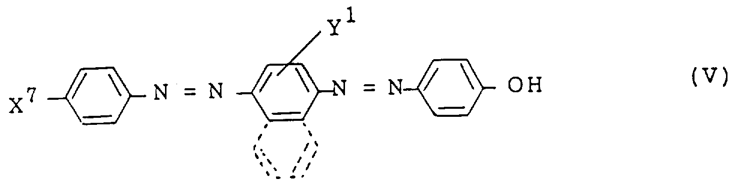

In the above formula, X⁷ is a hydrogen atom, a halogen atom, a nitro group or a lower alkoxycarbonylamino group, and Y¹ is as defined above.

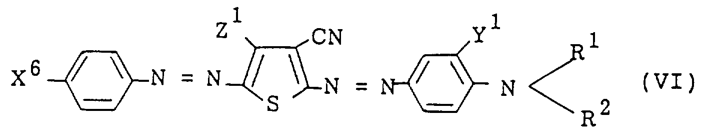

In the above formula, Z¹ is a hydrogen atom or a methyl group, and x⁶, Y¹, R¹ and R are as defined above.

The type of the amino acid used in the present invention may be a neutral amino acid such as glycine, alanine, aminobutyric acid or aminocaproic acid; an acidic amino acid such as aspartic acid or glutamic acid; and a basic amino acid such as lysine or arginine. Among them, glycine, alanine or glutamic acid is preferred, and glycine and glutamic acid is more preferred. Particularly preferred is glycine.

The amino acid derivative may be a compound having at least one, preferably two, hydrogen atoms in the amino group replaced with an organic group. Further, with respect to an amino acid having two or more amino groups, it is sufficient that at least one hydrogen atom of one of the amino groups is replaced with an organic group. There is no particular restriction as to the substituent for the amino acid, so long as it does not impair the water solubility of the amino acid derivative or it does not provide adverse effects in the dyeing bath. Examples of such a substituent are a C₁₋₄ alkyl group such as a methyl group, an ethyl group or a propyl group; a C₁₋₄ alkoxy C₁₋₄ alkyl group such as a methoxymethyl group, a methoxyethyl group or an ethoxyethyl group; a C₁₋₄ hydroxyalkyl group such as a hydroxyethyl group or a hydroxypropyl group; a C₁₋₄ cyanoalkyl group such as a cyanomethyl group or a cyanoethyl group; an acyl group such as an acetyl group; an alkenyl group such as an allyl group; a poly lower alkyleneoxide group (the number of alkylene group n = 2 to 4); and a lower alkyl ether poly lower alkyleneoxide group (n = 2 to 4). Particularly preferred are a C₁₋₄ alkyl group, a C₁₋₄ hydroxyalkyl group and a C₁₋₄ alkoxy C₁₋₄ alkyl group. As the amino acid derivative, N,N-dimethylglycine, N-methylglycine, N,N-bishydroxyethylglycine and N-methylalanine are preferred as specific examples.

The salt of such an amino acid or an amino acid derivative is usually an alkali metal salt, such as a lithium salt, a sodium salt or a potassium salt. particularly preferred is a sodium salt.

In the present invention, when an amino acid or an amino acid derivative is added in an alkaline medium, such an acid or acid derivative will be present in the form of a salt in the system.

The amount of such an amino acid or an amino acid derivative, or a salt thereof, is usually from 0.02 to 2.0 g/ℓ, preferably from 0.05 to 1.0 g/ℓ, in the dyeing bath from the viewpoint of the effects for preventing the decomposition of the disperse dye.

In the present invention, a specific polycarboxylic acid or a salt thereof is incorporated to the dyeing bath in addition to the amino acid, the amino acid derivative or the salt thereof. Such a specific polycarboxylic acid or a salt thereof is at least one member selected from the group consisting of ethylenediamine having at least two hydrogen atoms of its amino group replaced with a -RCOOH group (R means a C₁₋₃ alkylene group) and a salt thereof; polyethylenepolyamine having at least two hydrogen atoms of its amino group or imino group replaced with a -RCOOH group (R means the same as defined above) or a salt thereof; and nitrilotriacetic acid (NTA), nitrilotripropionic acid (NTP), iminodiacetic acid (IDA), iminodipropionic acid (IDP), β-hydroxyethyl-iminodiacetic acid, β-hydroxyethyl-iminodipropionic acid and salts thereof.

The amino group of ethylenediamine or polyethylenepolyamine can further be substituted by a hydroxyalkyl group having 1 to 3 carbon atoms, such as a hydroxyethyl group in addition to a -RCOOH group.

R in the -RCOOH group is an alkylene group having 1 to 3 carbon atoms, such as a methylene group, a ethylene group, a propylene group or an isopropylene group, and particularly preferred is a methylene group.

The number of the ethylene units in the polyethylenepolyamine is 2 to 4, and the number of amino groups or imino groups therein is 2 to 8 according to the number of ethylene units.

Examples of the polycarboxylic acid prepared from ethylenediamine or polyethylenepolyamine having at least two hydrogen atoms of its amino group or imino group replaced with a -RCOOH group are:
ethylenediamine-N,N'-diacetic acid (EDDA),
ethylenediamine-N,N,N',N'-tetraacetic acid (EDTA),
N-(2-hydroxyethyl)-ethylenediamine-N,N,N'-triacetic acid (HEDTA),
diethylenetriamine-N,N,N',N'',N''-pentaacetic acid (DTPA), and
triethylenetetramine-N,N,N',N'',N''',N'''-hexaacetic acid (TTHA).

The preferred polycarboxylic acid is ethylenediaminediacetic acid, ethylenediamine-N,N,N',N'-tetraacetic acid, nitrilotriacetic acid or iminodiacetic acid.

The salt of the polycarboxylic acid is usually an alkaline metal salt, such as a lithium salt, a sodium salt or a potassium salt, and the sodium salt is preferred.

When the polycarboxylic acid is added to the alkaline dyeing bath, a certain amount of alkaline is used to form the alkaline salt of said carboxylic acid. Therefore, it is preferable to add the alkaline salt of the polycarboxylic acid.

The amount of such a specified polycarboxylic acid or a salt thereof is usually from 0.1 to 4 g/ℓ, preferably from 0.5 to 2.0 g/ℓ in the dyeing bath.

The ratio of the amount of ① an amino acid, an amino acid derivative or a salt thereof to the amount of ② the specific polycarboxylic acid or the salt thereof, is 1:0.1 to 1:10, preferably from 1:1 to 1:5.

The dyeing method of the present invention may be applied to a woven fabric, a knitted fabric or a nonwoven fabric made of polyester fibers, or polyester fibers and other fibers or to yarns of such fibers. As the abovementioned other fibers, cellulose fibers such as cotton, hemp or rayon, and nitrogen-containing fibers such as nylon, wool or silk, may be mentioned.

The dyeing may be conducted, as mentioned above, under an alkaline condition, preferably in a range of pH 8 to 11, more preferably pH 8 to 10, usually under a pressure which is commonly applied for dyeing polyester fibers at a temperature of from 120 to 140°C.

As a pH controlling agent, an alkali metal compound such as sodium hydroxide, potassium hydroxide, sodium carbonate or sodium hydrogen carbonate may usually used. Preferably, sodium hydroxide is used.

Further, in the dyeing method of the present invention, it is possible to conduct post treatment such as antistatic treatment or softening treatment which is commonly applied to fibers after dyeing in accordance with a usual dyeing method.

According to the present invention, the abovementioned amino acid member and the specific polycarboxylic acid or the salt thereof are present in the dyeing bath, whereby dyeing of polyester fibers which used to be conducted under a weakly acidic condition can be conducted under an alkaline condition with good reproducibility and desizing effect while preventing the decomposition of the disperse dye. Thus, a single bath scouring and dyeing method for polyester fabrics has been made possible, which used to be difficult to adopt on an industrial scale by the conventional techniques. Further, a polyester oligomer precipitating in the dyeing bath from the interior of the fibers under the dyeing condition will dissolve in an alkaline dyeing bath, whereby a trouble (such as tarring or blooming) caused by the precipitated oligomer as observed in the case of dyeing under an acidic condition, can be prevented.

Now, the present invention will be described in further detail with reference to Examples. However, it should be understood that the present invention is by no means restricted by such specific Examples.

### EXAMPLES 1 to 10 and REFERENCE EXAMPLE 1

Twenty parts of a disperse dye of the formula (A), (B) or (C) was slurried by adding 40 parts of a naphthalene sulfonic acid-formalin condensation product, 40 parts of sodium lignin sulfonate and water, and thoroughly pulverized by means of a sand mill. Then, each slurry was spray-dried to obtain a disperse dye composition.

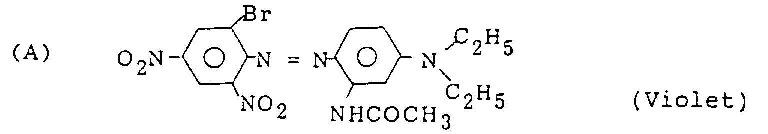

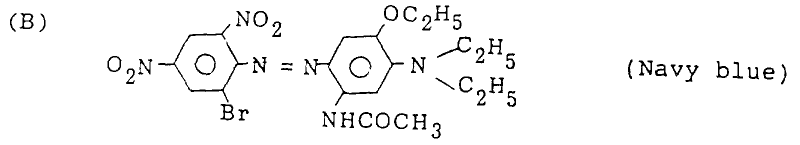

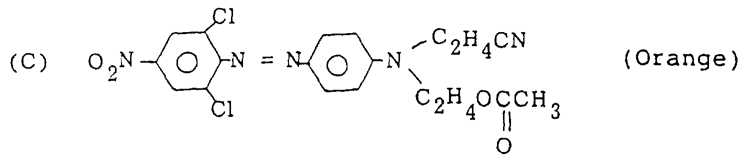

The disperse dye compositions containing disperse dyes of the formulas (A), (B) and (C), respectively, were mixed in a weight ratio of 4:2:4 to obtain a mixture (black product) of the disperse dye compositions. By using this mixture in an amount of 4% by weight relative to the fabric to be dyed and using 0.5 g/ℓ of a leveling agent (Eganal LMD-J, tradename, manufactured by Hoechst AG) relative to the dyeing bath as a dyeing assistant, an amino acid and a sodium salt of a polycarboxylic acid as shown in Table 1 in an amount as identified in Table 1 as an additive and by controlling the pH of the dyeing bath to 9.7 with NaOH, a polyester fabric Tropical (tradename, manufactured by Toray Industries, Inc.) was dyed at a bath ratio of 1:10 at a dyeing temperature of 135°C for 30 minutes. Then, the fabric was washed and dried in a usual manner to obtain a dyed fabric.

As a standard for evaluation of the dyed fabric, the dyeing bath was prepared in the same manner as above except that no amino acid and salt of polycarboxylic acid was used, and 0.2 g/ℓ of acetic acid and 0.6 g/ℓ of sodium acetate were used to adjust the dyeing bath to pH 5.0 which is commonly employed for dyeing polyester fibers, followed by dyeing in the same manner as above (Reference Example 1). By using the dyed fabric obtained in Reference Example 1 as the standard, the dyeing results of each dyed fabric was evaluated. The results are shown in Table 1.

The evaluation method of each dyed fabric was as follows.

### Evaluation method

Surface density: The reflectance of the dyed fabric was measured by a spectrophotometer (MS-2020 manufactured by Macbeth Company), and the value K/S was calculated and represented by a relative value based on the value of the Reference Example 1 being 100.

Difference in color hue: The reflectance of the dyed fabric was measured by a spectrophotometer (MS-2020, manufactured by Macbeth Company), and the difference in color hue ΔE from the dyed fabric obtained in Reference Example 1 was obtained from CIEL*a*b*. The larger the numerical value of ΔE, the more different the color. As an index for color difference of the dyed fabric, ΔE being not higher than 1.0 is acceptable.

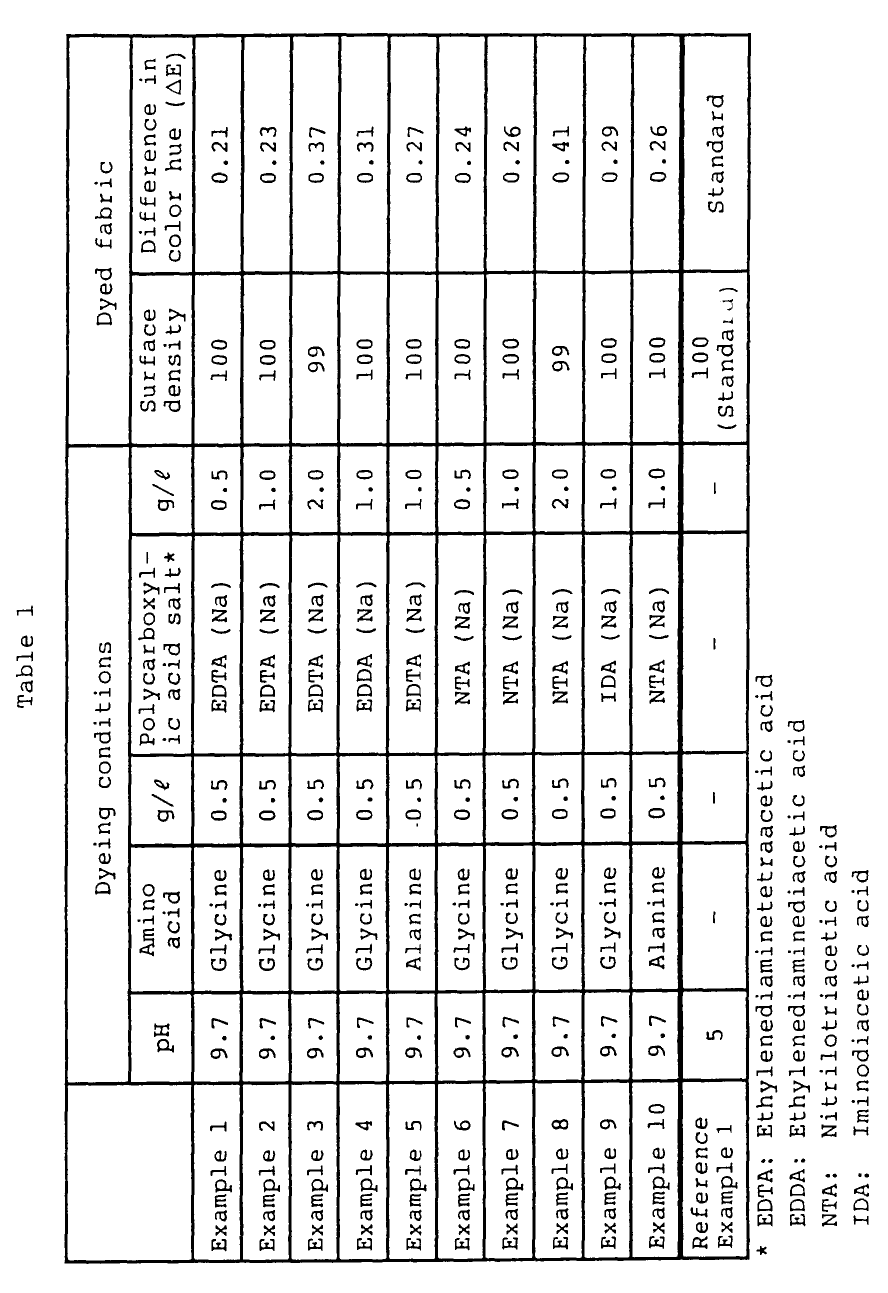

### EXAMPLES 11 to 18 and COMPARATIVE EXAMPLES 1 and 2

Dyeing was conducted in the same manner as in Example 1 except that the disperse dye of the formula (A) (violet) used in Example 1 and non-scoured polyester taffeta grey fabric (the amount of polyacrylic acid ester type sizing agent deposited on the fabric was 2.54% by weight relative to the fabric) were employed.

As Comparative Examples 1 and 2, dyeing was conducted in the same manner as in Example 11 except in the absence of the salt of polycarboxylic acid.

The dyed fabric was thoroughly washed with water, dried and the remaining amount of the sizing agent was measured according to Soxhlet Method (solvent: carbon tetrachloride, 95°C, 2 hours). The results are shown in Table 2.

It is evident from the results shown in Table 2, excellent desizing effect is observed by incorporating the salt of the specific polycarboxylic acid with the amino acid.

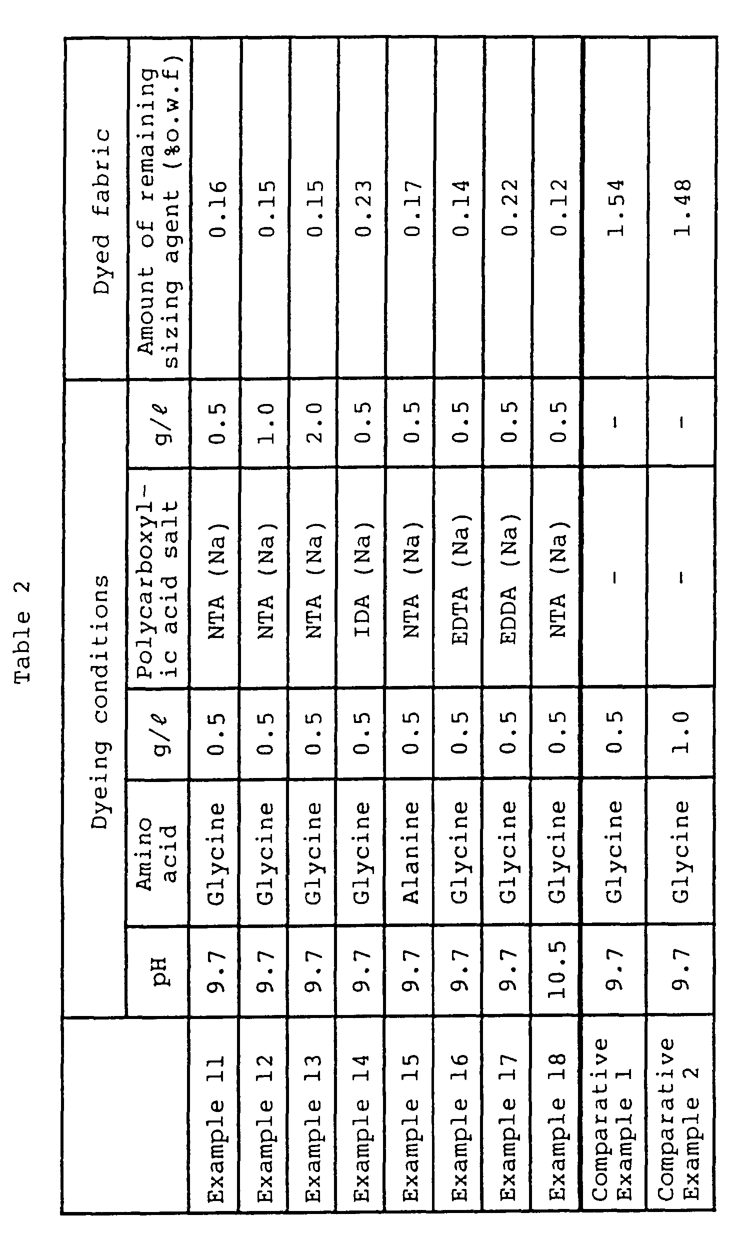

## Claims

1. A method for dyeing polyester fibers by using a disperse dye, wherein said dyeing is conducted under an alkaline condition in an aqueous medium in the presence of ① at least one amino acid member selected from the group consisting of an amino acid, an amino acid derivative having at least one hydrogen atom of its amino group replaced with an organic group, and a salt of such an amino acid or amino acid derivative, and ② at least one polycarboxylic acid or a salt thereof selected from the group consisting of ethylenediamine having at least two hydrogen atoms of its amino group replaced with a -RCOOH group (R means a C₁₋₃ alkylene group) and a salt thereof; polyethylenepolyamine having at least two hydrogen atoms of its amino group or imino group replaced with a -RCOOH group (R means the same as defined above) and a salt thereof; and nitrilotriacetic acid, nitrilotripropionic acid, iminodiacetic acid, iminodipropionic acid, β-hydroxyethyl-iminodiacetic acid, β-hydroxyethyl-iminodipropionic acid and salts thereof.

2. The method according to Claim 1, wherein said amino acid member is glycine, alanine or glutamic acid.

3. The method according to Claim 1 or 2, wherein said polycarboxylic acid or salt thereof is at least one member selected from the group consisting of ethylenediaminediacetic acid, ethylenediamintetraacetic acid, nitrilotriacetic acid, iminodiacetic acid and sodium salts thereof.

4. The method according to Claim 1, 2 or 3, wherein the pH of the dyeing bath is from 8 to 11.

5. The method according to Claim 1, 2 or 3, wherein the dyeing temperature is from 120 to 140°C.

6. The method according to Claim 1, 2 or 3, wherein said amino acid, amino acid derivative or salt thereof is present in an amount of from 0.02 to 2.0 g/ℓ of the dyeing bath.

7. The method according to Claim 1, 2 or 3, wherein said polycarboxylic acid or salt thereof is present in an amount of from 0.1 to 4 g/ℓ of the dyeing bath.

8. The method according to Claim 1, 2 or 3, wherein the ratio of the amount of said amino acid derivative or salt thereof to the amount of said polycarboxylic acid or salt thereof is 1:0.1 to 1:10.

## Patentansprüche

1. Verfahren zum Färben von Polyesterfasern durch Verwendung eines Dispersionsfarbstoffs, wobei das Färben unter alkalischer Bedingung in einem wäßrigen Medium in Gegenwart von ① mindestens einem Aminosäurevertreter, gewählt aus der eine Aminosäure, ein Aminosäurederivat, bei dem mindestens ein Wasserstoffatom der Aminogruppe durch eine organische Gruppe ersetzt ist, und ein Salz einer solchen Aminosäure oder eines solchen Aminosäurederivats umfassenden Gruppe, und ② mindestens einer Polycarbonsäure oder einem Salz davon, gewählt aus der Ethylendiamin, bei dem mindestens zwei Wasserstoffatome der Aminogruppe durch eine -RCOOH-Gruppe (R bedeutet eine C₁₋₃-Alkylgruppe) ersetzt sind und ein Salz hiervon; Polyethylenpolyamin, bei dem mindestens zwei Wasserstoffatome der Aminogruppe oder Iminogruppe durch eine -RCOOH-Gruppe (R hat die gleiche Bedeutung wie oben) ersetzt sind und ein Salz hiervon; und Nitrilotriessigsäure, Nitrilotripropionsäure, Iminodiessigsäure, Iminodipropionsäure, β-Hydroxyethyl-iminodiessigsäure, β-Hydroxyethyl-iminodipropionsäure und Salze hiervon umfassenden Gruppe, durchgeführt wird.

2. Verfahren nach Anspruch 1, wobei der Aminosäurevertreter Glycin, Alanin oder Glutaminsäure ist.

3. Verfahren nach Anspruch 1 oder 2, wobei die Polycarbonsäure oder ein Salz hiervon mindestens ein Vertreter ist, gewählt aus der Ethylendiamindiessigsäure, Ethylendiamintetraessigsäure, Nitrilotriessigsäure, Iminodiessigsäure und Natriumsalze hiervon umfassenden Gruppe.

4. Verfahren nach Anspruch 1, 2 oder 3, wobei der pH des Färbebades 8 bis 11 beträgt.

5. Verfahren nach Anspruch 1, 2 oder 3, wobei die Färbetemperatur 120 bis 140°C beträgt.

6. Verfahren nach Anspruch 1, 2 oder 3, wobei die Aminosäure, das Aminosäurederivat oder ein Salz hiervon in einer Menge von 0,02 bis 2,0 g/l des Färbebades vorliegt.

7. Verfahren nach Anspruch 1, 2 oder 3, wobei die Polycarbonsäure oder ein Salz hiervon in einer Menge von 0,1 bis 0,4 g/l des Färbebades vorliegt.

8. Verfahren nach Anspruch 1, 2 oder 3, wobei das Verhältnis der Menge des Aminosäurederivats oder eines Salzes hiervon zu der Menge der Polycarbonsäure oder eines Salzes hiervon 1:0,1 bis 1:10 beträgt.

## Revendications

1. Procédé pour teindre des fibres de polyester à l'aide d'un colorant dispersable, dans lequel ladite teinture est effectuée dans des conditions alcalines dans un milieu aqueux, en présence de (1) au moins un composé d'acide aminé choisi dans l'ensemble constitué par un acide aminé, un dérivé d'acide aminé dont au moins un atome d'hydrogène de son groupe amino est remplacé par un groupe organique, et un sel de cet acide aminé ou ce dérivé d'acide aminé, et (2) au moins un acide polycarboxylique ou un sel de celui-ci, choisi dans l'ensemble constitué par l'éthylènediamine dont au moins deux atomes d'hydrogène de son groupe amino sont remplacés par un groupe -RCOOH (R signifiant un groupe alkylène en C₁-C₃) et un sel de celle-ci une polyéthylènepolyamine dont au moins deux atomes d'hydrogène de son groupe amino ou de son groupe imino sont remplacés par un groupe -RCOOH (R ayant la même signification que ci-dessus) et un sel de celle-ci ; et l'acide nitrilotriacétique, l'acide nitrilotripropionique, l'acide iminodiacétique, l'acide iminodipropionique, l'acide β-hydroxyéthyliminodiacétique, l'acide β-hydroxyéthyliminodipropionique, et leurs sels.

2. Procédé selon la revendication 1, dans lequel ledit composé d'acide aminé est la glycine, l'alanine ou l'acide glutamique.

3. Procédé selon la revendication 1 ou 2, dans lequel ledit acide polycarboxylique ou son sel est au moins un élément choisi dans l'ensemble constitué par l'acide éthylènediaminediacétique, l'acide éthylènediaminetétraacétique, l'acide nitrilotriacétique, l'acide iminodiacétique et leurs sels de sodium.

4. Procédé selon la revendication 1, 2 ou 3, dans lequel le pH du bain de teinture est de 8 à 11.

5. Procédé selon la revendication 1, 2 ou 3, dans lequel la température de teinture est de 120 à 140°C.

6. Procédé selon la revendication 1, 2 ou 3, dans lequel ledit acide aminé, dérivé d'acide aminé ou sel de ceux-ci est présent en une quantité de 0,02 à 2,0 g/l du bain de teinture.

7. Procédé selon la revendication 1, 2 ou 3, dans lequel ledit acide polycarboxylique ou sel de celui-ci est présent en une quantité de 0,1 à 4 g/l du bain de teinture.

8. Procédé selon la revendication 1, 2 ou 3, dans lequel le rapport de la quantité dudit dérivé d'acide aminé ou sel de celui-ci à la quanitité dudit acide polycarboxylique ou sel de celui-ci est de 1/0,1 à 1/10.
